# EUROPEAN PATENT APPLICATION

(11) **EP 3 051 457 A1**
(43) Date of publication of application: **03.08.2016**
(21) Application number: 16151500.2
(22) Date of filing: 15.01.2016
(51) Int. Cl.: G06F 21/62, G06F 17/30

(54) **METHOD FOR PERFORMING FILE SYNCHRONIZATION CONTROL, AND ASSOCIATED APPARATUS**

(30) Priority: 02.02.2015 TW 104103448
(71) Applicant: Synology Incorporated, Taipei 103 (TW)
(72) Inventor: Chu, Bie-I, 320 Taoyuan City (TW); Lee, Wen-Sung, 220 New Taipei City (TW); Wu, Yi-Chi, 880 Penghu County (TW); Kuo, Ching-Hua, 814 Kaohsiung City (TW)
(74) Representative: Becker Kurig Straus

(57) **Abstract**

A method for performing file synchronization control includes: generating and storing metadata of a plurality of files into a storage module of the electronic device, where file contents of the plurality of files are stored in at least one server, the electronic device and the server communicate with each other through at least one network, and the metadata include access rules corresponding to the plurality of files to indicate whether a user of the electronic device has permissions to perform file operations on the plurality of files; and according to the metadata of the plurality of files, controlling file synchronization between the electronic device and the server to update a synchronization file set within the electronic device. An associated apparatus performs the method.

## Description

The present invention relates to a method and apparatus for performing file synchronization control.

Traditional synchronization schemes are insufficient to support file access control permissions. Traditional synchronization software developed for enterprise users can merely perform synchronization upon all files in a directory or folder in a coarse manner, in order to transmit and synchronize file access control permissions between a plurality of synchronization terminals. This traditional synchronization scheme cannot, however, correctly perform file operations such as read (or download), create and modify according to the file access permissions owned by the client side or a user.

In a scenario where there are plenty of users and the synchronization scale is relatively large (e.g. the total number of users exceeds hundreds and the number of files which can be synchronized exceeds hundreds of thousands), if a specific synchronization mounting point exists and a sub-folder of this mounting point and the files in the sub-folder are configured with different file access permissions corresponding to different users, some problems may be introduced. For example, the traditional synchronization scheme may not follow the file access permissions of the files in these sub-folders. If a user has to download the permissions for the sub-folders, the user may need to download, create and modify all files in the sub-folders. Hence, an administrator cannot easily manage the entire system without introducing side effects. More particularly, if the administrator expects this synchronization mounting point can be synchronized to the apparatus of each user, the traditional synchronization scheme may incorrectly assign additional permissions to some users.

As the traditional synchronization scheme cannot provide a proper synchronization service for users without introducing side effects, there is a need for a novel method for improving the performance of file synchronization control systems.

This in mind, the application aims at providing methods and an apparatus for performing file synchronization control in order to solve the abovementioned problems.

This is achieved by methods for performing file synchronization control and associated apparatus and computer program product according to claims 1, 8 and 15. The dependent claims pertain to corresponding further developments and improvements.

As will be seen more clearly from the detailed description following below, the claimed method is applied to an electronic apparatus and includes: receiving metadata of a plurality of files from a server; storing the metadata into a storage module of the electronic device, wherein file contents of the plurality of files are stored in the server, the electronic device and the server communicate with each other through at least one network, and the metadata includes access rules corresponding to the plurality of files to indicate whether a user of the electronic device has permission to perform a file operation upon the plurality of files, respectively; and controlling file synchronization between the electronic device and the server according to the metadata of the plurality of files, to update a synchronization file set within the electronic device.

In addition, the claimed computer program product includes program codes for indicating at least one processor to perform the above method, and the electronic apparatus includes the at least one processor.

In addition, another claimed method is applied to a server and includes: sending metadata of a plurality of files to an electronic apparatus from the server to allow the electronic apparatus to store the metadata into a storage module of the electronic apparatus, wherein file contents of the plurality of files are stored in the server, the electronic apparatus and the server communicate with each other through at least one network, and the metadata includes access rules corresponding to the plurality of files to indicate whether a user of the electronic device has permission to perform a file operation upon the plurality of files; and utilizing the electronic apparatus to control file synchronization between the electronic apparatus and the server according to the metadata to update a synchronization file set in the electronic apparatus.

In addition, the claimed apparatus includes at least a portion of a server, and comprises a network interface circuit and a processing circuit. The network interface circuit is configured in the server and arranged to provide an access service for an electronic apparatus through the network, wherein file contents of a plurality of files are stored in the server, and the electronic apparatus and the server communicate with each other through the network. The processing circuit is coupled to the interface circuit and configured at the server, and is arranged to send metadata of the plurality of files to the electronic apparatus from the server to allow the electronic apparatus to store the metadata into a storage module in the electronic apparatus, wherein the metadata includes access rules corresponding to the plurality of files to indicate whether a user of the electronic device has permission to perform a file operation upon the plurality of files, and the processing circuit controls file synchronization between the electronic device and the server according to the metadata of the plurality of file to update a synchronization file set within the electronic device.

In the following, the invention is further illustrated by way of example, taking reference to the accompanying drawings. Thereof:
Fig. 1 is a diagram illustrating an apparatus for performing file synchronization control according to an embodiment of the present invention,
Fig. 2 is a flowchart illustrating a method for performing file synchronization control according to an embodiment of the present invention,
Fig. 3 is a diagram illustrating a file synchronization control scheme performed by the method shown in Fig. 2 according to an embodiment of the present invention,
Fig. 4 is a diagram illustrating a file access permission change procedure performed by the method shown in Fig. 2 according to an embodiment of the present invention,
Fig. 5 is a diagram illustrating an insufficient file operation permission for the client side procedure performed by the method shown in Fig. 2 according to an embodiment of the present invention,
Fig. 6 is a diagram illustrating a user group permission change procedure performed by the method shown in Fig. 2 according to an embodiment of the present invention,
Fig. 7 is a diagram illustrating a file synchronization permission control flow performed by the method shown in Fig. 2 according to an embodiment of the present invention, and
Fig. 8 is a flowchart illustrating a method for performing file synchronization control according to another embodiment of the present invention.

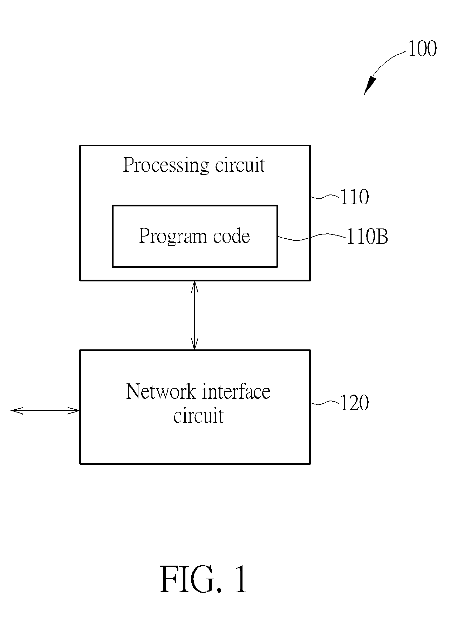

Fig. 1 is a diagram illustrating an apparatus 100 for performing file synchronization control according to an embodiment of the present invention. The apparatus 100 may include at least a portion of (e.g. part or all of) an electronic apparatus. For example, the apparatus 100 may be a circuit system in the electronic apparatus, or the apparatus 100 may be the whole electronic apparatus. The apparatus 100 may be a file synchronization control system including the electronic apparatus, and this file synchronization control system may also include at least one server (e.g. one or more servers). By means of illustration, but not limitation, an exemplary electronic apparatus may include: a multifunctional mobile phone, a tablet and a personal computer such as a desktop computer or a laptop Computer. According to some embodiments, an exemplary electronic apparatus may further include a server, such as the server mentioned above.

As shown in Fig. 1, the apparatus 100 includes a processing circuit 110 and a network interface circuit 120. The processing circuit 110 and the network interface circuit 120 are coupled to each other, wherein the processing circuit 110 and the network interface circuit 120 are both configured in the electronic apparatus. According to this embodiment, the network interface circuit 120 is used to provide network services for the apparatus 100 in order to maintain operations of the electronic apparatus. More particularly, the network interface circuit 120 may be used to access the aforementioned server through at least one network. Further, the processing circuit 110 may include at least one processor to perform a program code 110B, and may be used to control the operation of the electronic apparatus in order to perform the fixed address access management based on the network service. More particularly, the processing circuit 110 includes a file and access rule synchronization control module (not shown in Fig. 1), for performing file synchronization control. For example, the file and access rule synchronization control module may be at least one program module in the program code 110B, such as at least one software module, wherein the program code 110B may represent programs executed at the electronic apparatus. According to some modifications of this embodiment, the program code 110B may be embedded in the processing circuit 110, and the file and access rule synchronization control module may be a hardware circuit, such as at least a portion of the processing circuit 110.

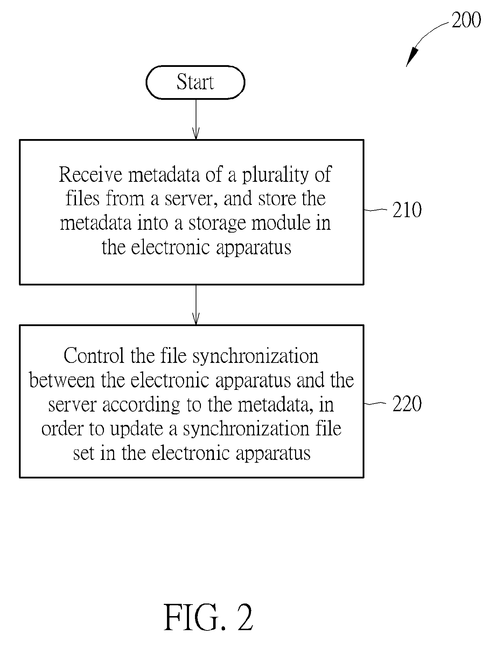

Fig. 2 is a flowchart illustrating a method 200 for performing file synchronization control according to an embodiment of the present invention. The method 200 may be applied to the apparatus 100 shown in Fig. 1 (especially the processing circuit 110 therein), which executes the aforementioned program code 110B through the aforementioned processor. By utilizing a computer program product, such as a CD storing the program code 110B (especially the installation version of the program code 110B), the user of the electronic apparatus or the administrator of the file synchronization control system may install the program code 110B on the apparatus 100, wherein the computer program product includes the program code 110B (especially the installation version thereof) for indicating to the processor that the method 200 shown in Fig. 2 should be performed. Hence, the processing circuit 110 (especially the file and access rule synchronization control module) of this embodiment may control the operation of the electronic apparatus to perform the method 200 shown in Fig. 2 based on the network service. The method 200 is summarized as follows:
In Step 210, the processing circuit 110 receives metadata of a plurality of files from a server (e.g. one of the aforementioned servers), and stores the metadata into a storage module in the electronic apparatus, wherein the file contents of the plurality of files are stored in the server, and the electronic apparatus and the server communicate with each other through the aforementioned network. The metadata may be stored in the same file of the storage module, in a plurality of files of the storage module, or in a database of the storage module.

In practice, the metadata may include access rules corresponding to the plurality of files, in order to indicate whether the user of the electronic apparatus has permission for performing file operations upon the plurality of files, such as reading (or downloading) files, creating files, modifying files, deleting files etc.

In Step 220, the processing circuit 110 controls the file synchronization between the electronic apparatus and the server according to the metadata, in order to update a synchronization file set in the electronic apparatus. In an embodiment, the files in the synchronization file set correspond to a portion of the plurality of files, rather than all of the plurality of files. More particularly, the file contents of the files in the synchronization file set equal the file contents of a portion of the plurality of files, rather than the file contents of all of the plurality of files.

Note that the file synchronization relationship between the electronic apparatus and the server may be regarded as a client-server relationship. The electronic apparatus may be regarded as a synchronization client side in the client-server relationship, and the server may be regarded as the synchronization server side in the client-server relationship. For brevity, in the following descriptions, the term "synchronization client side" is replaced with "client side", and the term "synchronization server side" is replaced with "server side".

Based on the method 200 shown in Fig. 2, the number of the plurality of files in the server side may be changed, and the number of the files in the synchronization file set in the client side may also be changed. In general, whether the number of the files in the synchronization file set is smaller than or equal to the number of the plurality of files will not affect the implementation of the present invention.

According to some embodiments, the electronic apparatus (especially the processing circuit 110) may periodically poll the server in order to know if the access rules of any file in the plurality of files are changed, wherein under the situation that the access rules of the files in the plurality of files are changed, the processing circuit 110 may update the metadata according to at least one change in the access rules. For example, the electronic apparatus (especially the processing circuit 110) may perform polling operations, and the polling operations may include: sending a request to the server in each time interval to obtain the latest data, such as the latest version of the access rules. When the access rules of the files in the plurality of files are changed, the server may inform the electronic apparatus of the aforementioned change. In practice, under the situation that the access rules of the files of the server are changed, the server may utilize the system call provided by the operating system where the server is located to immediately obtain the access rules of the modified files, such as the information of the file access permission and the directory access permission of a user group. Similarly, under the situation that the access rules of any file in the electronic apparatus are changed, the electronic apparatus may also utilize the system call provided by the operating system where the electronic apparatus is located to obtain the access rules of the modified file.

According to some embodiments, the electronic apparatus (especially the processing circuit 110) may perform long-polling operations, wherein the electronic apparatus (especially the processing circuit 110) may still periodically poll the server to know whether the access rules of any file in the plurality of files are changed, wherein the periods of the long-polling operations may be much longer than the periods of the polling operations. After the server receives a request sent by the electronic apparatus, the server does not have to immediately respond to the electronic apparatus, but may wait for a period of time. If the server has new data in this period of time, such as the latest version of the access rules (i.e. the existence of the aforementioned at least one change), the server may send the latest version of the access rules to the electronic apparatus; otherwise, the server may send a response to the electronic apparatus to inform the electronic apparatus that the current access rules are not updated. In this way, when access rules of the files in the plurality of files are changed, the server may inform the electronic apparatus of the change. Then, according to the aforementioned change, the processing circuit 110 may update the metadata. For example, the processing circuit 110 may update the metadata in order to add or delete at least one file in the synchronization file set, wherein the file is synchronized to the electronic apparatus for the server.

According to some embodiments, when the electronic apparatus sends a request which is used to perform a file operation upon a specific file in the partial file of the plurality of files, the server may check whether the user has permission for performing the specific operation. When it is detected that the user does not have permission, the server may reject the file operation. Further, according to the specific file, the processing circuit 110 may perform a rollback operation upon the electronic apparatus to restore a file corresponding to the specific file in the synchronization file set. The detailed implementations of the rollback operation are well-known in this field and therefore omitted here for brevity. Note that the aforementioned request may be regarded as a request arranged to synchronize the change (e.g. the user modifies the file corresponding to the specific file in the synchronization file set) in the file operations on the electronic apparatus to the server.

According to some embodiments, the electronic apparatus (especially the processing circuit 110) may periodically poll the server to know whether the permission of the user is changed. When the permission of the user is changed, the server may inform the electronic apparatus. For example, a change in the permission of the user may be caused by a change in the user group, i.e. the user may originally belong to a first user group and then belong to a second user group with different permission. Further, according to the aforementioned change in permission of the user, the processing circuit 110 may update the metadata. For example, the processing circuit 110 may update the metadata and add or delete at least one file in the synchronization file set according to the updated metadata.

In some embodiments, according to at least one file in the plurality of files in the attributes of an operating system, the server (especially a processing circuit therein) may perform at least one checking operation of a plurality of checking operations for a specific file in the plurality of files, to generate at least one check result. Further, according to the check result, the server (especially a processing circuit therein) determines metadata of the specific file in order to perform file synchronization control upon the specific file. In an embodiment, the specific file is neither a directory nor a folder. If a specific file or a plurality of files has not yet been assigned with access permissions, the file(s) may inherit the access permission of the folder where the file(s) is located, or may be set to have predetermined access permissions. Note that examples of the plurality of checking operations may include (but are not limited to) logic determinations of some attributes in the specific file. The aforementioned check result indicates the synchronization permission of the specific file, wherein examples of the check result may include (but are not limited to): whether the specific file is removable, whether the specific file is creatable and removable, whether the specific file is modifiable and downloadable, and whether the specific file is downloadable. In practice, attributes of the file may include (but are not limited to) access permissions, names of attached files and file sizes.

In these embodiments, the file includes the specific file. For example, under the situation that the file represents a single file, the file is the specific file, and the aforementioned checking operation may be performed according to attributes of the specific file. Under the situation that the file represents a plurality of files, these files may further comprise a parent directory of the specific file, and the checking operation may be performed according to attributes of the specific file and attributes of the parent directory. Under the situation that the file represents a plurality of files, the file may further comprises all ancestors of the file, and the checking operation may be performed according to attributes of the specific file and attributes of the ancestors, wherein the parent directory may be an example of the ancestors. In practice, the attributes of the aforementioned parent directory and ancestors may include (but are not limited to) the access permissions of the parent directory and the ancestors, and the attributes of the file may include (but are not limited to) the access permissions, names of attached files and file sizes.

According to some embodiments, metadata of a specific file in the plurality of files may include attributes of the specific file in an operating system. Further, according to the attributes of the specific file in the operating system, the server (especially a processing circuit therein) may perform at least one checking operation of a plurality of checking operations (e.g. the plurality of checking operations mentioned in previous embodiments) upon the specific file to generate at least one check result for performing file synchronization control upon the specific file. The metadata may include (but is not limited to) access permissions of various files and/or access permissions of the parent folder (or parent directory) and ancestors. The metadata may include (but is not limited to) attributes such as attached file names and file sizes of various files, wherein each time the electronic apparatus performs operations upon files, the server (especially a processing circuit therein) may perform the aforementioned checking operation to determine the synchronization permission of the specific file for the user. In other embodiments, the checking operation may be performed by the electronic apparatus. According to the attributes of the specific file in the operating system, the electronic apparatus (especially the processing circuit 110 therein) may perform the checking upon the specific file to generate the check result in order to perform file synchronization control upon the specific file.

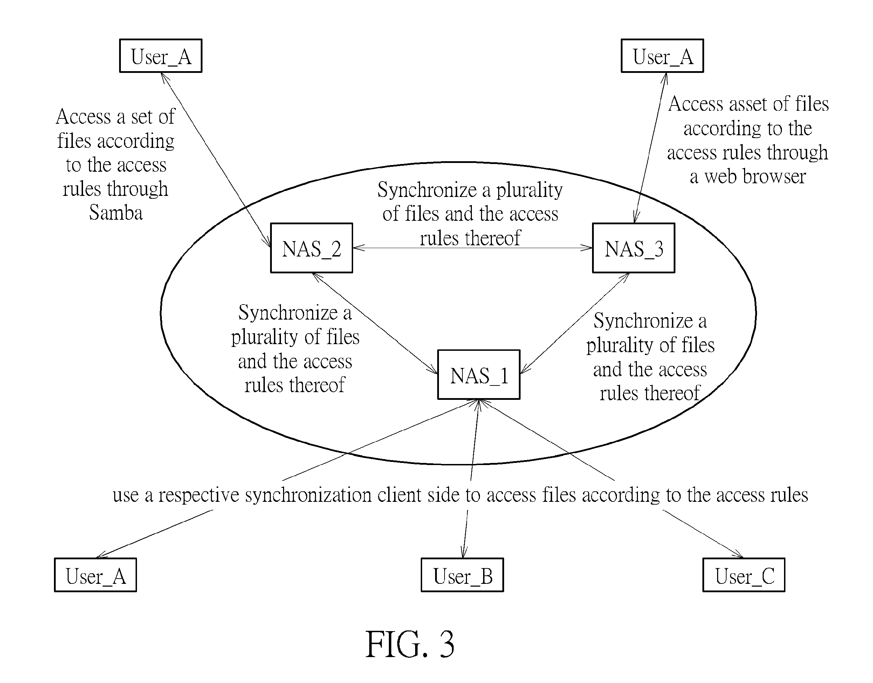

Fig. 3 is a diagram illustrating a file synchronization control scheme performed by the method 200 shown in Fig. 2 according to an embodiment of the present invention. According to this embodiment, the synchronization control scheme may ensure that the access for all files in various different client sides conforms to the specifications of the file access rules thereof, and may perform synchronization among the access rules of a plurality of storage devices, such as network attached storages (NAS) NAS_1, NAS_2 and NAS_3, to ensure that all other associated file services conform to the latest file access rules, wherein network attached storages NAS_1, NAS_2, and NAS_3 may be an example of the aforementioned server, and any portable electronic apparatus (e.g. a multi-functional mobile phone) of the portable electronic apparatuses {User_A}, {User_B} and {User_C} of the users A, B and C, respectively, may be an example of the aforementioned electronic apparatus.

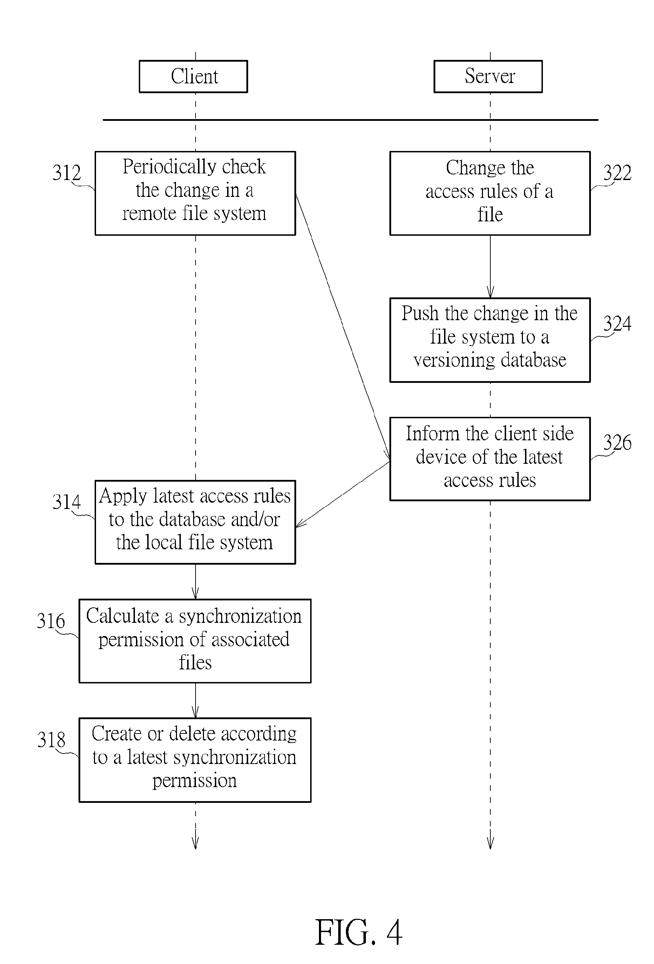

According to this embodiment, the network attached storages NAS_1, NAS_2, and NAS_3 may synchronize a plurality of files and the access rules thereof, and more particularly, may synchronize the plurality of files and access rules corresponding to the plurality of files. No matter whether the user A accesses a set of files through a web browser or Samba (refer to http://www.samba.org/), the portable electronic apparatus {User_A} of the user A may access this set of files according to a set of access rules corresponding to this set of files for the user A. Further, the users A, B, and C may synchronize a first set of files, a second set of files and a third set of files with the synchronization client sides thereof, respectively (e.g. the portable electronic apparatuses {User_A}, {User_B}, and {User_C} of the users A, B, and C, respectively). Any two set of files in the first set of files, the second set of files and the third set of files may be partially the same or totally different, wherein the user A may use any of the portable electronic apparatus {User_A} according to a first set of access rules corresponding to the first set of files which are designed for the user A in order to access the first set of files, the user B may use the portable electronic apparatus User_B according to a second set of access rules corresponding to the second set of files which are designed for the user B, and the user C may use the portable electronic apparatus User_C according to a third set of access rules corresponding to the third set of files which are designed for the user C. The first set of files, the second set of files and the third set of files may be examples of the aforementioned synchronization file sets. Further, the first set of access rules, the second set of access rules and the third set of access rules may be examples of the aforementioned metadata. According to the aforementioned first set of access rules, the second set of access rules and the third set of access rules, the network attached storages NAS_1, NAS_2, and NAS_3 may perform at least one checking operation of the plurality of checking operations to generate at least one check result, and may synchronize the first set of files, the second set of files and the third set of files to the synchronization client sides of the users A, B and C according to the check result. Fig. 4 is a diagram illustrating a file access permission change procedure performed by the method shown in Fig. 2 according to an embodiment of the present invention, wherein the "client" shown in the top left corner of Fig. 4 may represent a client side device, such as the electronic apparatus. The process flow is summarized as follows.

In Step 312, the client side device periodically checks the change in a remote file system. The change in the remote file system may be a change in the access rules of any of the plurality of files in the aforementioned server.

In Step 314, the client side device applies the latest access rules to the database and/or the local file system in the electronic apparatus. For example, the client side device may apply the latest access rules by modifying the metadata.

In Step 316, the client side device calculates a synchronization permission of associated files.

In Step 318, the client side device creates or deletes at least one file (or at least one directory) according to a latest synchronization permission.

In Step 322, the server changes the access rules of a file in response to the control of a specific user (e.g. a manager of a research and design team).

In Step 324, the server pushes the change in the file system to the versioning database therein.

In Step 326, the server informs the client side device of the latest access rules.

According to this embodiment, after the user modifies the file access permission of a specific file through the server side, the client side device may analyze the synchronization permission of this file according to the latest access permission of this file, and correctly perform file operations corresponding to the synchronization file sets according to this synchronization permission, such as creating files or directories, deleting files or directories, or modifying the access permissions of the files or directories.

For example, if a specific client side does not have the access permission for reading the current file, the files and access rule synchronization control module of the client side will not create the synchronization version of this file on the file system of this client side. Hence, this file may correctly remain undiscovered by the user of the client side. After a specific time point, the file access permission of this file is modified, making the client side have access permission for writing to the file. Then, a next time the client side communicates with the server side, the server side may send back the latest file access permission (e.g. the change in the access permission of this file) to the client side. After the client side correctly receives the latest file access permissions, the client side will write the latest file access information into the database and/or the file system therein. After the file and access rule synchronization control module of the client side analyzes the latest file access permission, it can be known from the analysis result that the synchronization permission of the current file includes downloadable and modifiable synchronization permissions. After that, the client side will download the current file from the server side, so that the synchronization version of the current file may correctly appear at the client side, so the user may write new information.

In view of the above, after a specific time point, if the file access permissions of this file are modified again, so that the access permission of the client side for reading and writing to the current file are revoked, when the client side communicates with the server side a next time and the client side receives the latest file access permission, the client side will write the latest file access information into the database and/or the file system therein. After the latest file access permission are analyzed (e.g. after generating at least one check result through the aforementioned checking operation), the files and access rule synchronization control module of the client side may know that the client side currently does not have the synchronization permission for this file according to the analysis result, and will remove the synchronization version of the file from the client side, so that the entire synchronization file set may be correctly synchronized according to the latest file access permission.

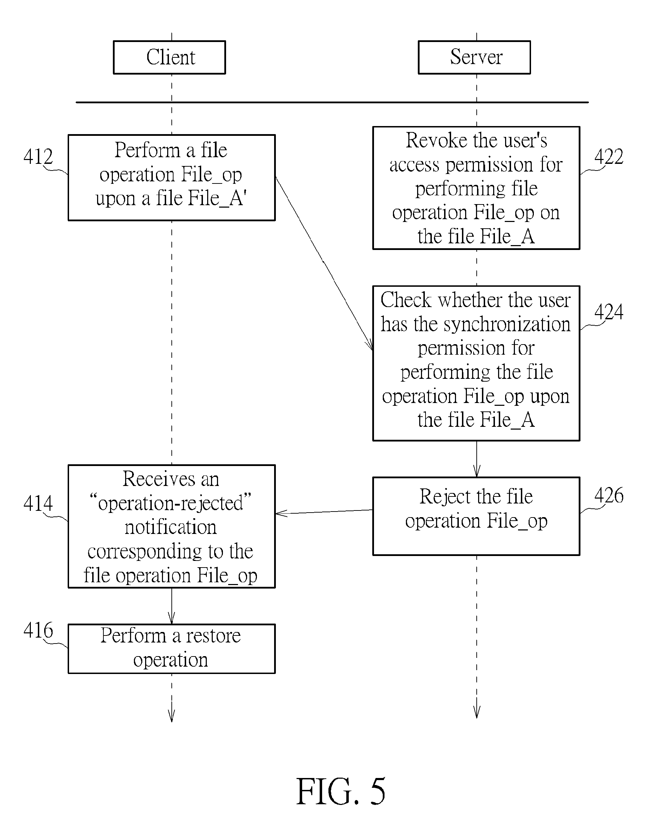

Fig. 5 is a diagram illustrating an insufficient file operation permission for the client side procedure performed by the method shown in Fig. 2 according to an embodiment of the present invention, wherein the "client" shown in the top left corner of Fig. 5 may represent a client side device such as the electronic apparatus. This process flow is regarded as a related process flow of the entire synchronization system when the client side performs operations without permissions.

In Step 412, in response to the control of a user (e.g. a member of the research and design team) on the client side device, the client side device performs a file operation File_op upon a file File_A' therein, wherein the file File_A' is the synchronization version of the file File_A, and the file File-A is located in the server. The client side device sends a request such as the aforementioned request, and the request is used to perform a file operation File_op upon the file File-A.

In Step 414, the client side device receives an "operation-rejected" notification from the file operation File_op.

In Step 416, the client side device performs a restore operation as mentioned above, to restore the file File_A'.

In Step 422, in response to the control of a specific user (e.g. the manager of the research and design team), the server revokes this user's access permission for performing file operation File_op on the file File-A.

In Step 424, according to a specific database such as the aforementioned version database, the server checks whether the user (or the client side device) has the synchronization permission for performing the file operation File_op upon the file File-A.

In Step 426, the server rejects the file operation File_op, and more particularly, sends the aforementioned notification of "operation-reject".

According to this embodiment, the user performs the file operation File_op on the file File_A' at the client side. Then, the file and access rule synchronization control module (e.g. synchronization software) in the client side will send the operation File_op to the server side, for applying modifications on the file File-A in the server side. After this request is transmitted to the server side, however, if the operation permission of the file File-A for the user of this client side is insufficient, the server side will find the permission insufficient when confirming the operation permission, and send back this information to the client side and reject this request. For example, the server side may generate at least one check result through the checking operation in the plurality of checking operations. Further, according to the aforementioned check result, the server side may check whether the user (or the client side device) has the synchronization permission for performing file operation File_op on the file File-A. Next, the client side will perform a necessary restore operation according to this process flow. This is merely for illustrative purposes, and not meant to be a limitation to the present invention. According to some modifications of this embodiment, the client side may selectively determine the synchronization permission once before the server side reports an insufficient synchronization permission. In this way, the operation loading of the server side may be reduced. Further, the determination of the synchronization permission of the server side may still be performed, in order to avoid error operations due to time difference. For example, under the situation that Step 412 is performed before Step 422 (i.e. client side performs file operation File_op upon the file File_A' and sends the request in advance), then the server revokes the permission for performing file operation File_ upon the file File-A of the user. If the server side does not check the synchronization permission, the client side will successfully perform an operation with insufficient permissions; by checking the synchronization permission at the server side, errors in the operation may be avoided.

For further enhancing the security, confirming the synchronization permission of the server side should be necessary to prevent the files and access rule synchronization control module (e.g. the synchronization software) in the client side and/or the metadata stored in the database from being intentionally modified.

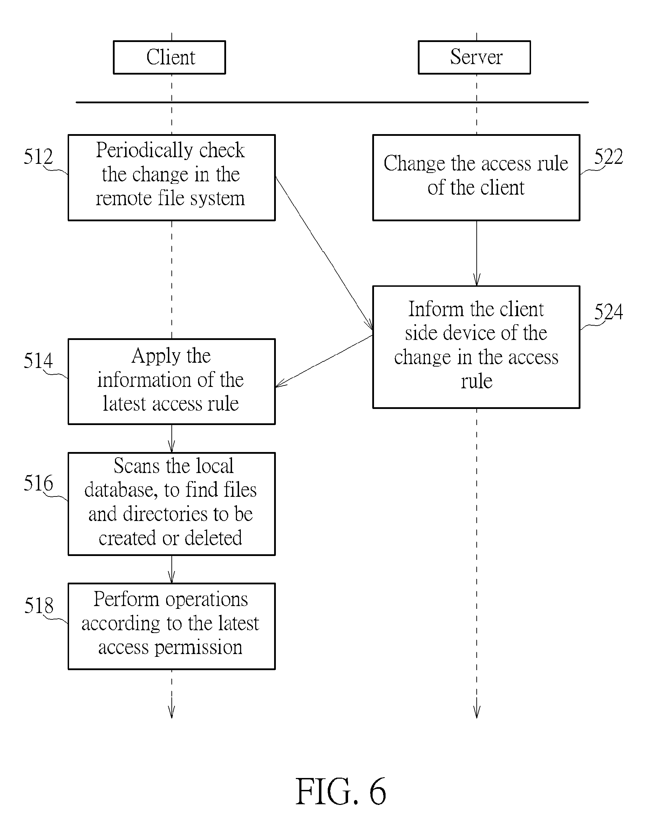

Fig. 6 is a diagram illustrating a "user group permission change" procedure performed by the method shown in Fig. 2 according to an embodiment of the present invention, wherein "the client" shown in the top left corner of Fig. 6 may represent the client side device such as the electronic apparatus. Note that this process flow is performed after the user group permission of the client side is changed.

In Step 512, the client side device periodically checks the change in the remote file system.

In Step 514, the client side device applies the information of the latest access rule. For example, the client side device may apply the information of the latest access rule by modifying the metadata.

In Step 516, the client side device scans the local database, to find files and directories to be created or deleted. More particularly, the client side device may analyze the contents of the database in the client side device (e.g. the latest metadata generated by modifying the previous metadata), to find files and directories to be created or deleted, and find files and directories where the access permission thereof need to be modified.

In Step 518, the client side device performs operations according to the latest access permission.

In Step 522, the server changes the access rule of the client (e.g. the client side device) in response to the control of a specific user (e.g. the manager of the research and design team).

In Step 524, the server informs the client side device of the change in the access rule. More particularly, the server sends the information of the latest access rule to the client side device.

According to the process flow shown in Fig. 4, when the access rules of files change, the server side will send the latest access rules to the client side to perform corresponding processing. When the user group belonging to the user of the client side changes, however, all files and directories at the client side may be affected. For example, a user may lose the synchronization permission for downloading some directories and/or files due to their leaving a specific group, or a user may obtain the synchronization permission for downloading some directories and/or files due to their joining a specific group. Under any of the above situations, based on the process flow shown in Fig. 6, the client side device may correctly remove files and directories that no longer have download synchronization permission from the file system of the client side, and may correctly download files and directories that have download synchronization permission.

According to an embodiment, after the user group is changed, the server side may rescan the entire database and the entire file system therein according to the file access rules of the files and directories at the server side and the information of the changed user group in order to analyze changes in the access permission and/or synchronization permission of each file for the user of the client side, and then send back the information to the client side to perform synchronization. This operation requires the server side to configure a large hard disk reading bandwidth with large operation resources, which increases the loadings of the server side for a client-server synchronization scheme. The embodiment shown in Fig. 6 therefore proposes a synchronization method which does not require the server side to rescan, which can greatly reduce the operations of the server side and the requirements of the hard disk reading bandwidth, and further improve the stability of the synchronization scheme.

According to the embodiment shown in Fig. 6, the client side receives the file access rules of all files and directories stored at the server side from the server side, and records the file access rules into the database of the client side, wherein all file access rules of the files and directories of the aforementioned server side include file access rules of files having no access permission for the user of the client side. When a user's group authority changes, the client side may obtain the latest user and related information of the group (i.e. the change in access rules mentioned in Step 524) from the server side. In this way, according to the file access rules of all files and directories of the server side and updated and the access permission of the updated user group, the client side may rescan the database in the entire client side to analyze and find out which files and directories should be newly created, and find out which files and directories should be deleted from the local file system. Since the local database of the client side owns the file access rules of all files, a situation where the server side has to rescan the entire file system can be avoided. The client side only needs to perform a rescan.

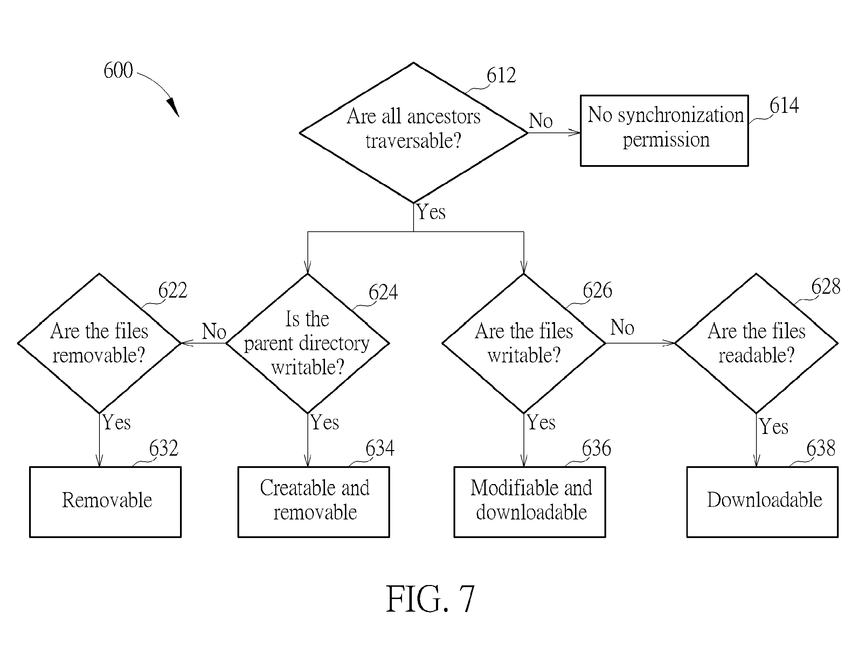

Fig. 7 is a diagram illustrating a file synchronization permission control flow 600 performed by the method shown in Fig. 2 according to an embodiment of the present invention, wherein the file synchronization permission control flow 600 may control the relationship between file access rules of any operating system and a predetermined synchronization permission set. For example, in a synchronization system, each synchronization client side may operate on different operating systems. To make the synchronization scheme provided by the present invention compatible with different file access rules of various operating systems, the predetermined synchronization permission set may include predefined synchronization permissions corresponding to file access rules of different operating systems. In this embodiment, predefined synchronization permissions may include (but are not limited to): creatable, removable, downloadable and modifiable, wherein the bottom sub-path of the four sub-paths may correspond to one or more synchronization permissions of these synchronization permissions. Note that the checking operation mentioned in Steps 612 and 622 - 628 may be an example of the plurality of checking operations and any of the check results in Steps 632 - 638 may be an example of the check result.

In Step 612, for a specific user (such as the user of the electronic apparatus) and according to the file access rules of a file (or directory) on an operating system (e.g. the operating system of the electronic apparatus), the client side device (e.g. the electronic apparatus) checks whether all ancestors of the file (or directory) may be traversed. If yes, the flow goes to Step 624 and Step 626 (in either order) to check the feasibility of establishing any of these four synchronization permissions; otherwise, the flow goes to Step 614.

In Step 614, the client side device determines that the user does not have the synchronization permission for the files (or directories).

In Step 622, for the current user and according to the file access rules on the current operating system, the client side device checks whether the files (or directories) can be removed. If yes, the flow goes to Step 632; otherwise, the flow waits for the check results of other sub-paths of the four sub-paths.

In Step 624, for the current user and according to the file access rules on the current operating system, the client side device checks whether the patent directory of the files (or directories) can be written. If yes, the flow goes to Step 634; otherwise, the flow goes to Step 622.

In Step 626, for the current user and according to the file access rules on the current operating system, the client side device checks whether the files (or directories) can be written. If yes, the flow goes to Step 636; otherwise, the flow goes to Step 628.

In Step 628, for the current user and according to the file access rules on the current operating system, the client side device whether the files (or directories) can be read. If yes, the flow goes to Step 638; otherwise, the flow waits for check results of other sub-paths of the four sub-paths.

In Step 632, the client side device generates the check result representing "removable". Hence, the client side device may record the synchronization permission of the files (or directories) as "removable".

In Step 634, the client side device generates the check result representing "creatable and removable". Hence, the client side device may record the synchronization permission of the files (or directories) as "creatable and removable".

In Step 636, the client side device generates the check result representing "modifiable and downloadable". Hence, the client side device may record the synchronization permission of the files (or directories) as "modifiable and downloadable".

In Step 638, the client side device generates the check result representing "downloadable". Hence, the client side device may record the synchronization permission of the files (or directories) as "downloadable".

According to file access permission control flow 600, the file and access rule synchronization control module may convert the file access permissions on the Linux system into four types of synchronization permissions, and may also convert the file access permissions such as an access control list (ACL) into four types of synchronization permission. According to this embodiment, the proposed synchronization scheme can be applied to various operating systems and file access rules thereof.

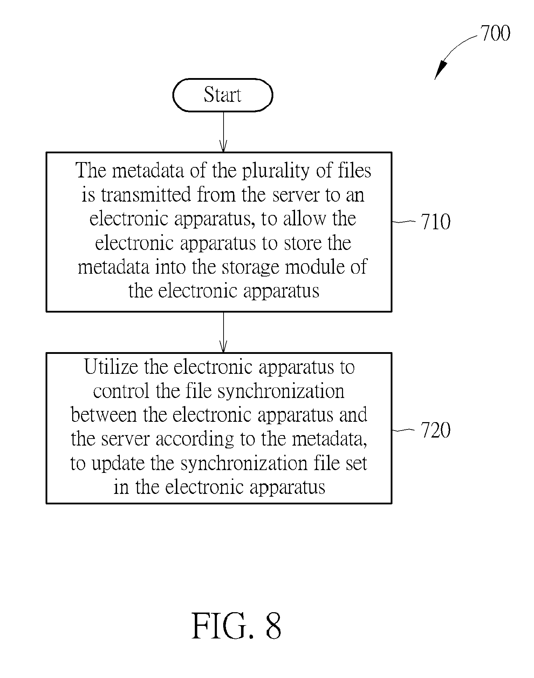

Fig. 8 is a flowchart illustrating a method 700 for performing file synchronization control according to another embodiment of the present invention. As mentioned above, according to some embodiments, the electronic apparatus may include the server. In this situation, the method 700 may be applied to the apparatus 100 shown in Fig. 1, and more particularly, to the processing circuit 110, which executes the program code 110B through the processor.

By utilizing a computer program product, such as a DVD storing the program code 110B (especially the installation version thereof), the server or the system administrator of the file synchronization control system may install the program code 110B on the apparatus 100, wherein the computer program product includes the program code 110B (especially the installation version thereof) to indicate to the processor that the method 700 shown in Fig. 8 should be performed. The method 700 is summarized as follows.

In Step 710, under the control of the processing circuit 110 in this embodiment, the metadata of the plurality of files is transmitted from the server to an electronic apparatus to allow the electronic apparatus to store the metadata into the storage module of the electronic apparatus, wherein the file contents of the plurality of files are stored in the server, the electronic apparatus and the server communicate with each other through the network, and the metadata includes the access rules corresponding to the plurality of files for indicating whether the user of the electronic apparatus has permission to perform file operations to the plurality of files.

In Step 720, according to the metadata, the processing circuit 110 in this embodiment utilizes the electronic apparatus to control the file synchronization between the electronic apparatus and the server for updating the synchronization file set in the electronic apparatus, wherein the files in the synchronization file set correspond to a portion of files of the plurality of files, rather than to all files in the plurality of files.

The embodiment shown in Fig. 2 may apply this method. Other embodiments can also apply this method, e.g. the embodiment shown in Fig. 3.

According to some embodiments, the electronic apparatus may periodically poll the server as to whether access rules of any file in the plurality of files are changed. Under the situation that access rules of a file in the plurality of files are changed, the processing circuit 110 of this embodiment may inform the electronic apparatus of at least one change in the access rules, thereby allowing the electronic apparatus to update the metadata.

According to some embodiments, when the electronic apparatus sends a request which is used to perform a file operation upon a specific file in a portion of the plurality of files, the processing circuit 110 of this embodiment may check whether the user has permission for performing said file operation upon the specific file. More particularly, when detecting that the user does not have permission, the processing circuit 110 of this embodiment may refuse the file operation, and allow the electronic apparatus to perform an restore operation (mentioned above) upon the electronic apparatus according to the specific file, to restore a file in the synchronization file set corresponding to the specific file.

According to some embodiments, the electronic apparatus may periodically poll the server as to whether the permissions of the user of the electronic apparatus are changed. When the permissions are changed, the processing circuit 110 of this embodiment may inform the electronic apparatus of at least one change in the permission of the user, and allow the electronic apparatus to update the metadata according to the change.

In some embodiments, according to attributes of at least one file in the plurality of files in an operating system, the processing circuit 110 of this embodiment performs at least one checking operation of a plurality of checking operations for a specific file in the plurality of files, to generate at least one check result, wherein in these embodiments, the at least one file includes the specific file. Further, according to the check result, the processing circuit 110 of these embodiments may determine the metadata of the specific file in order to perform file synchronization control upon the specific file. In an embodiment, the specific file is neither a directory nor a folder.

The method shown in the embodiments of the present invention (e.g. the method 200 shown in Fig. 2 and the method 700 shown in Fig. 8) and an associated apparatus (e.g. the apparatus 100) may perform correct synchronization operations according to file access rules of a specific file established by the user, and may support different file systems (e.g. file systems of different operating systems) and file access rules in different formats in a cross-platform manner. Further, the methods and associated apparatuses shown in the embodiments of the present invention may correctly perform file synchronization according to new file access permissions after the user permission or the user group thereof of the client side is changed. Further, after the user permission or the user group thereof of the client side is changed, the server side does not need to rescan the database or the file system. Hence, the overall efficiency of the system may be greatly increased.

## Claims

1. A method for performing file synchronization control, the method applied to an electronic apparatus, and **characterized by**:
receiving metadata of a plurality of files from a server, and storing the metadata into a storage module of the electronic device, wherein file contents of the plurality of files are stored in the server, the electronic device and the server communicate with each other through at least one network, and the metadata includes access rules corresponding to the plurality of files to indicate whether a user of the electronic device has a permission for performing a file operation upon the plurality of files; and
controlling file synchronization between the electronic device and the server according to the metadata of the plurality of files, to update a synchronization file set within the electronic device.

2. The method of claim 1, **characterized in that** the method further comprises:
periodically polling the server whether access rules of any of the plurality of files are changed; and
when access rules of at least one file of the plurality of files are changed, updating the metadata according to the change in the access rules.

3. The method of claim 2, **characterized in that** when the access rules of the file in the plurality of files are changed, the server informs the electronic apparatus of the change in the access rules; or the step of updating the metadata according to the change in the access rules further comprises:
updating the metadata according to the change in the access rules to add or delete at least one file in the synchronization file set, wherein the file is at least one synchronization file synchronized to the electronic apparatus by the server.

4. The method of claim 1, **characterized in that** when the electronic apparatus sends a request, and the request is used to perform the file operation upon a specific file in the plurality of files, the server checks whether the user has a permission for performing the file operation upon the specific file; when it is detected that the user does not have the permission for performing the file operation upon the specific file, the server refuses the file operation; and the method further comprises:
performing a rollback operation upon the electronic apparatus according to the specific file, to restore a file in the synchronization file set corresponding to the specific file.

5. The method of claim 1, **characterized in that** when the permission of the user is changed, the server informs the electronic apparatus of at least one change in the permission of the user, and the method further comprises:
updating the metadata according to the change in the permission of the user.

6. The method of claim 1, **characterized in that** according to attributes of at least one file in the plurality of files in an operating system, the server performs at least one checking operation of a plurality of checking operations upon a specific file in the plurality of files, to generate at least one check result, wherein the file includes the specific file; and according to the check result, the server determines metadata of the specific file for performing file synchronization control upon the specific file.

7. The method of claim 1, **characterized in that** metadata of a specific file in the plurality of files includes attributes of the specific file in an operating system; and the method further comprises:
according to the attributes of the specific file in the operating system, performing at least one checking operation of a plurality of checking operations upon the specific file, to generate at least one check result for performing file synchronization control upon the specific file.

8. A method for performing file synchronization control, the method applied to a server, the method **characterized by**:
sending metadata of a plurality of files to an electronic apparatus from the server, to allow the electronic apparatus to store the metadata into a storage module of the electronic apparatus, wherein file contents of the plurality of files are stored in the server, the electronic apparatus and the server communicate with each other through at least one network, and the metadata includes access rules corresponding to the plurality of files to indicate whether a user of the electronic device has a permission for performing a file operation upon the plurality of files; and
utilizing the electronic apparatus to control file synchronization between the electronic apparatus and the server according to the metadata, to update a synchronization file set in the electronic apparatus.

9. The method of claim 8, **characterized in that** the electronic apparatus periodically polls the server whether access rules of any file in the plurality of files are changed; and the method further comprises:
when the access rules of the file in the plurality of files are changed, informing the electronic apparatus of at least one change in the access rules, to allow the electronic apparatus to update the metadata according to the change in the access rules.

10. The method of claim 8, **characterized in that** the method further comprises:
when access rules of a file in the plurality of files are changed, informing the electronic apparatus of at least one change in the access rules, to allow the electronic apparatus to update the metadata according to the change in the access rules.

11. The method of claim 8, **characterized in that** the method further comprises:
when the electronic apparatus sends a request, and the request is arranged to perform a file operation upon a specific file of the plurality of files, checking whether the user has a permission for performing the file operation upon the specific file; and
when it is detected that the user does not have the permission for performing the file operation upon the specific file, refusing the file operation to allow the electronic apparatus to perform a rollback operation upon the electronic apparatus according to the specific file, to restore a file in the synchronization file set corresponding to the specific file.

12. The method of claim 8, **characterized in that** the method further comprises:
when the permission of the user is changed, informing the electronic apparatus of at least one change in the permission of the user, to allow the electronic apparatus to update the metadata according to the change in the permission of the user.

13. The method of claim 8, **characterized in that** the method further comprises:
according to attributes of at least one file in the plurality of files in an operating system, performing at least one checking operation of a plurality of checking operations upon a specific file in the plurality of files, to generate at least one check result, wherein the file includes the specific file; and
determining metadata of the specific file according to the check result, for performing file synchronization control upon the specific file.

14. The method of claim 8, **characterized in that** metadata of a specific file in the plurality of files includes attributes of the specific file in an operating system; and the method further comprises:
performing at least one checking operation of a plurality of checking operations upon the specific file according to the attributes of the specific file in the operating system, to generate at least one check result for performing file synchronization control upon the specific file.

15. An apparatus (100) for performing file synchronization control, the apparatus (100) comprising at least a portion of a server, the apparatus (100) **characterized by**:
a network interface circuit (120), configured in the server and arranged to provide an access service for an electronic apparatus through at least one network, wherein file contents of a plurality of files are stored in the server, and the electronic apparatus and the server communicate with each other through the network; and
a processing circuit (110), coupled to the network interface circuit (120) and configured at the server, the processing circuit (110) arranged to send metadata of the plurality of files to the electronic apparatus from the server, to allow the electronic apparatus to store the metadata into a storage module in the electronic apparatus, wherein the metadata includes access rules corresponding to the plurality of files to indicate whether a user of the electronic device has a permission for performing a file operation upon the plurality of files, and the processing circuit (110) controls file synchronization between the electronic device and the server according to the metadata of the plurality of file, to update a synchronization file set within the electronic device.
